# EUROPEAN PATENT APPLICATION

(11) **EP 1 465 104 A1**
(43) Date of publication of application: **06.10.2004**
(21) Application number: 04007383.5
(22) Date of filing: 26.03.2004
(51) Int. Cl.: G06K 9/00, G06K 9/20, G08B 15/00

(54) **Camera system for recognising authorised persons**

(30) Priority: 27.03.2003 JP 2003088052
(71) Applicant: MATSUSHITA ELECTRIC INDUSTRIAL CO., LTD., Kadoma-shi, Osaka 571-8501 (JP)
(72) Inventor: Doi, Makoto, Ishikawa-gun Ishikawa 921-8806 (JP); Ikoma, Ken, Yokohama-shi Kanagawa 225-0023 (JP); Wakiyama, Koji, Yokohama-shi Kanagawa 227-0063 (JP)
(74) Representative: Holmes, Miles

(57) **Abstract**

There are provided a authentication object pick up device including: a camera 3 for picking up a face image of a person to be authenticated; a camera 2 being pointed at a direction of an eye of the person obtained by analyzing the face image picked up by the camera 3, thereby picking up an eye image of the person; a camera 9 for picking up an image of a circumference of places in which the camera 3 and the camera 2 are disposed; and controller 14 for analyzing the image picked up by the camera 9 and starting an image pick-up operation of the camera 3 when detecting that the person enters a shooting range of the camera 3. Immediately when the person enters the shooting range, the image pick-up operation is started. Consequently, it is possible to shorten a time taken for acquiring an authentication object image.

## Description

### Background of the Invention

### Field of the Invention

The present invention relates to an authentication object image pick-up device for acquiring any of an iris pattern, a retina pattern and a face feature pattern to be biological information of a person to be authenticated and an image pick-up method thereof. Moreover, the present invention particularly relates to a suitable authentication object image pick-up device for shortening a time taken for acquiring an authentication object image to reduce the standby time of the authenticated person and an image pick-up method thereof.

### Description of the Related Art

There has been known a conventional iris image pick-up device described in the Patent Document 1 (JP-A-2002-122899), for example. The conventional art in the Patent Document 1 will be described with reference to Figs. 7 and 8. A conventional iris image pick-up device 101 comprises an iris image pick-up camera 102 for picking up the iris image of an object (a person to be authenticated), a face image pick-up camera 103 for picking up the face image of the object, a distance measuring sensor 104 for measuring a distance to the object, a turntable 105 for mounting the cameras 102 and 103 and the distance measuring sensor 104, a tilt motor 107 for tilt turning the turntable 105 and a pan motor 106 for pan turning the optical axis of the iris image pick-up camera 102 by means of a mirror 111, and an image processing section 109 for detecting the position of the eye of the object from the face image picked up by the camera 103 and extracting an iris pattern from an iris image picked up by the camera 102.

During a standby before the iris image pick-up device starts to pick up the iris image, the tilt motor 107 of the conventional iris image pick-up device 101 turns the distance measuring sensor 104 downward to continuously measure a distance. When the distance measuring sensor 104 detects that the object approaches the iris image pick-up device 101 and enters the shooting range of the face image pick-up camera 103, the tilt motor 107 is turned to bring the face image pick-up camera 103 toward a front, thereby picking up the face image of the object. The image processing section 109 carries out an image processing over the face image, thereby detecting the position of the eye of the object. Furthermore, the pan motor 106 and the tilt motor 107 are turned to bring the iris image pick-up camera 102 into the iris direction of the object, thereby acquiring a desirable iris image.

In the conventional iris image pick-up device, however, the distance measuring sensor is also used as a proximity sensor, that is, a sensor for detecting whether the object approaches as described above. For this reason, the turntable 105 is to be held in a downward direction which is different from the image pick-up directions of the face image and the iris image in order to stand by. Consequently, it is necessary to greatly turn the turntable when the object approaches to pick up the. face image and the iris image. Thus, there is a problem in that a time is prolonged corresponding to the turn of the turntable to pick up the authentication object image of the object.

### Summary of the Invention

The invention has been made in order to solve the conventional problems and has an object to provide a authentication object image pick-up device capable of picking up the authentication object image of a person to be authenticated in a short time and an image pick-up method thereof.

The invention provides an authentication object image pick-up device comprising: face image pick-up means for picking up a face image of a person to be authenticated; eye image pick-up means being pointed at a direction of an eye of the person obtained by analyzing the face image of the person picked up by the face image pick-up means, for picking up an eye image of the person; monitoring image pick-up means for picking up an image of a circumference of places in which the face image pick-up means and the eye image pick-up means are provided; and control means for analyzing the image picked up by the monitoring image pick-up means and starting an image pick-up operation of the face image pick-up means when detecting that the person enters a shooting range of the face image pick-up means.

By this structure, the image picked up by the monitoring image pick-up means is subjected to an image processing to decide whether the person to be authenticated approaches or not. Therefore, it is possible to quicken the start of the image pick-up operation by the face image pick-up means, thereby shortening a time taken for acquiring an authentication object image.

The invention provides an authentication object image pick-up device comprising eye image pick-up means for picking up an eye image of a person to be authenticated, monitoring image pick-up means for picking up an image of a circumference of a place in which the eye image pick-up means is provided, and control means for analyzing the image picked up by the monitoring image pick-up means and starting an image pick-up operation of the eye image pick-up means when detecting that the person enters a shooting range of the eye image pick-up means.

By this structure, the image picked up by the monitoring image pick-up means is subjected to an image processing to decide whether the person to be authenticated approaches or not. Therefore, it is possible to quicken the start of the image pick-up operation by the eye image pick-up means, thereby shortening a time taken for acquiring an authentication object image.

The authentication object image pick-up device according to the invention is characterized in that the control means extracts an iris feature pattern or a retina feature pattern from the eye image.

By this structure, the authentication object image pick-up device according to the invention can be applied to an iris authentication device or a retina pattern authentication device.

The invention provides an authentication object image pick-up device comprising: face image pick-up means for picking up a face image of a person to be authenticated, monitoring image pick-up means for picking up an image of a circumference of a place in which the face image pick-up means is provided, and control means for analyzing the image picked up by the monitoring image pick-up means and starting an image pick-up operation of the face image pick-up means when detecting that the person enters a shooting range of the face image pick-up means.

By this structure, the image picked up by the monitoring image pick-up means is subjected to an image processing to decide whether the person to be authenticated approaches or not. Therefore, it is possible to quicken the start of the image pick-up operation by the face image pick-up means, thereby shortening a time taken for acquiring an authentication object image.

The authentication object image pick-up device according to the invention is characterized in that the control means extracts a face feature pattern from the face image.

By this structure, the authentication object image pick-up device according to the invention can be applied to an authentication device using a face feature pattern.

The authentication object image pick-up device according to the invention is characterized in that the control means monitors the image picked up by the monitoring image pick-up means and extracts the feature pattern from an authentication object image picked up at the moment that the image of the person becomes stationary.

By this structure, an authentication object image having no blur can be picked up and a feature pattern can be extracted with high precision.

The authentication object image pick-up device according to the invention is characterized in that the control means decides a stationary object in the shooting range as a person to be authenticated when images of a plurality of moving objects are present in the image picked up by the monitoring image pick-up means.

By this structure, a true object, that is, a person to be authenticated can be specified with high precision even if a plurality of objects is taken by the monitoring image pick-up means. Consequently, it is possible to reliably acquire the authentication object image of the person.

The invention provides an authentication object image pick-up method comprising the steps of: analyzing an image picked up by monitoring image pick-up means for picking up an image of a circumference of a place in which face image pick-up means for picking up a face image of a person to be authenticated is provided; starting an image pick-up operation of the face image pick-up means when detecting that the person enters a shooting range of the face image pick-up means; pointing eye image pick-up means at a direction of an eye of the person obtained by analyzing the face image picked up by the face image pick-up means; and picking up an eye image of the person.

By this structure, the image picked up by the monitoring image pick-up means is subjected to an image processing to decide whether the person to be authenticated approaches or not. Therefore, it is possible to quicken the start of the image pick-up operation by the eye image pick-up means, thereby shortening a time taken for acquiring an authentication object image.

The invention provides an authentication object image pick-up method comprising: the steps of analyzing an image picked up by monitoring image pick-up means for picking up an image of a circumference of a place in which eye image pick-up means for picking up an eye image of a person to be authenticated is provided and starting an image pick-up operation of the eye image pick-up means when detecting that the person enters a shooting range of the eye image pick-up means.

By this structure, the image picked up by the monitoring image pick-up means is subjected to an image processing to decide whether the person to be authenticated approaches or not. Therefore, it is possible to quicken the start of the image pick-up operation by the eye image pick-up means, thereby shortening a time taken for acquiring an authentication object image.

The authentication object image pick-up method according to the invention is characterized in that an iris feature pattern or a retina feature pattern is extracted from the eye image.

By this structure, the invention can be applied to an iris authentication device or a retina pattern authentication device.

The invention provides an authentication object image pick-up method comprising the steps of: analyzing an image picked up by monitoring image pick-up means for picking up an image of a circumference of a place in which face image pick-up means for picking up a face image of a person to be authenticated is provided; and starting an image pick-up operation of the face image pick-up means when detecting that the person enters a shooting range of the face image pick-up means.

By this structure, the image picked up by the monitoring image pick-up means is subjected to an image processing to decide whether the person to be authenticated approaches or not. Therefore, it is possible to quicken the start of the image pick-up operation by the face image pick-up means, thereby shortening a time taken for acquiring an authentication object image.

The authentication object image pick-up method according to the invention is characterized in that a face feature pattern is extracted from the face image.

By this structure, the invention can be applied to an authentication device using the face feature pattern.

The authentication object image pick-up method according to the invention is characterized in that the image picked up by the monitoring image pick-up means is monitored and the feature pattern is extracted from a authentication object image picked up the moment that an image of the person becomes stationary.

By this structure, an authentication object image having no blur can be picked up and a feature pattern can be extracted with high precision.

The authentication object image pick-up method according to the invention is characterized in that when images of a plurality of moving objects are present in the image picked up by the monitoring image pick-up means, the stationary object in the shooting range is set to be the person to be authenticated.

By this structure, a true object, that is, a person to be authenticated can be specified with high precision even if a plurality of objects is taken by the monitoring image pick-up means. Consequently, it is possible to reliably acquire the authentication object image of the person.

### Brief Description of the Drawings

Fig. 1 is a view showing the structure of an iris image pick-up device according to a first embodiment of the invention;
Fig. 2 is a diagram showing the functional structure of the iris image pick-up device according to the first embodiment of the invention,
Fig. 3 is a diagram for explaining the operation of the iris image pick-up device according to the first embodiment of the invention,
Fig. 4 is a view showing an example of the image processing method of the iris image pick-up device according to the first embodiment of the invention,
Fig. 5 is a diagram for explaining the operation of an iris image pick-up device according to a second embodiment of the invention,
Fig. 6 is a diagram for explaining the operation of an iris image pick-up device according to. a third embodiment of the invention,

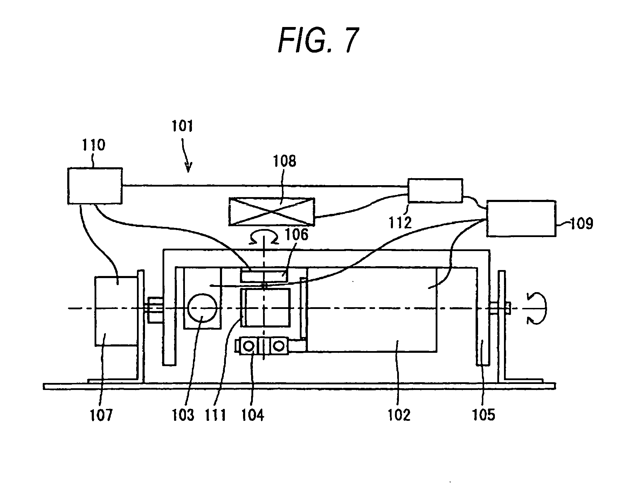

Fig. 7 is a view showing the structure of a conventional iris image pick-up device, and

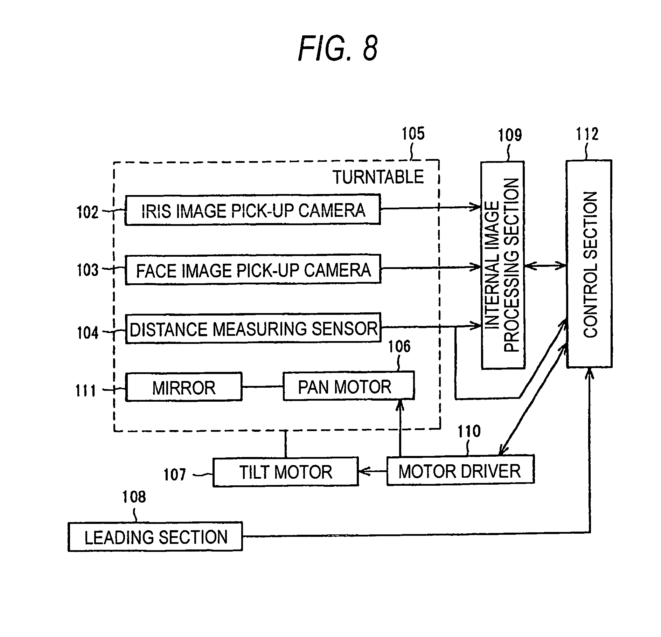

Fig. 8 is a diagram showing the functional structure of the conventional iris image pick-up device.

In the drawings, a reference numeral 1 refers to an iris image pick-up device; 2 to an iris image pick-up camera; 3 to a face image pick-up camera; 4 to a distance measuring sensor; 5 to a turntable; 6 to a pan motor; 7 to atilt motor; 8 to a leading section; 9 to a monitoring camera; 10 to an external image processing section; 11 to an internal image processing section; 12 to a motor driver; 13 to a mirror; 14 to a control section;

### Detailed Description of the Preferred Embodiments

An embodiment of the invention will be described below with reference to the drawings. While the description will be given to an example in which an iris image is acquired as biological information in the following embodiment, the invention can also be applied to the acquirement of other biological information, for example, a retina image for extracting a retina pattern and a face image for extracting a face feature pattern.

### (First Embodiment)

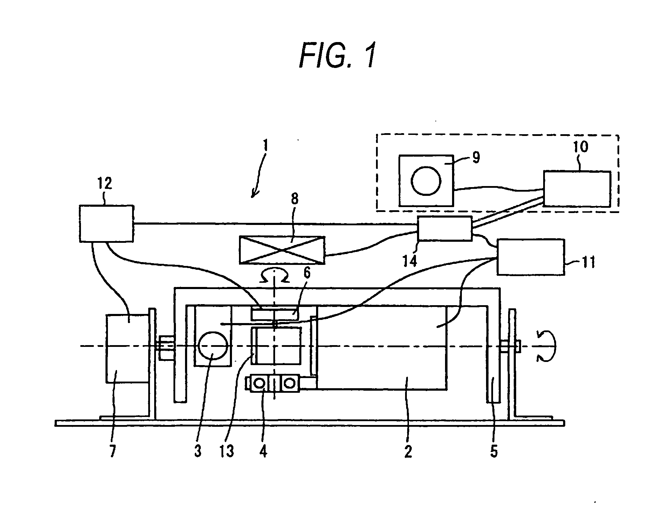

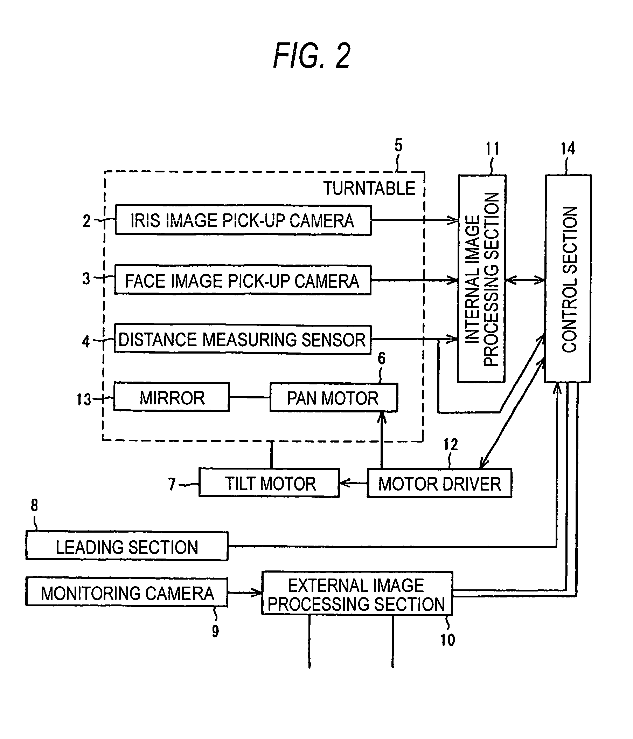

Fig. 1 is a. view showing the structure. of an iris image pick-up device according to a first embodiment of the invention, and Fig. 2 is a diagram showing a functional structure thereof. An iris image pick-up device 1 according to the first embodiment of the invention comprises an iris image pick-up camera 2 formed by a telephoto camera for picking up the image of an iris, a face image pick-up camera 3 for picking up the face image of an object (a person to be authenticated) within pan and tilt operation ranges, a distance measuring sensor 4 provided in the vicinity of the optical axis of the iris image pick-up camera 2 and serving to measure a distance between the iris image pick-up camera 2 and the object, a turntable 5 for mounting the iris image pick-up camera 2, the face image pick-up camera 3 and the distance measuring sensor 4, a mirror 13 provided on the optical axis of the iris image pick-up camera 2 and having a rotating axis which is parallel with the direction of the vertical axis of the iris image pick-up camera 2, a pan motor 6 for turning the mirror 13 in a target direction, a tilt motor 7 for turning the turntable 5 in a target direction, and a leading section 8 for leading the object to the shooting range of the iris image pick-up camera 2.

The iris image pick-up device 1 according to the embodiment further comprises a monitoring camera 9 mounting a wide angle lens for always monitoring the circumference of a place in which the iris image pick-up device 1 body is provided, an external image processing section 10 for storing and processing the image of the monitoring camera 9 and extracting the image of a moving person in the image which is picked up, an internal image processing section 11 for processing the image picked up by the face image pick-up camera 3 to calculate the position of the eye of the object and for processing the image picked up by the iris image pick-up camera 2 to extract the iris pattern in the eye image of the object, a motor driver 12 for calculating a turning angle for turning the optical axis of the mirror 13, that is, the iris image pick-up camera 2 toward a target coordinate obtained by the internal image processing section 11, computing a coordinate transformation for adapting the mutual coordinates of the monitoring camera 9 and the face image pick-up camera 3 and driving the motors 6 and 7 based on a command signal calculating the turning angles of the pan motor 6 and the tilt motor 7, and a control section 14 for controlling these operations and generating the command signal.

While the external image processing section 10 and the internal image processing section 11 are separately provided in the embodiment, these may be integrated with each other. Furthermore, the processing sections 10 and 11 and the control section 14 may be integrated with each other. In addition, the monitoring camera 9 to be fixed and provided has a clear relative positional relationship with the iris image pick-up device 1 to be fixed and provided. Therefore, the relative positional relationship between the monitoring camera 9 and the iris image pick-up camera 2 and face image pick-up camera 3 is also clear so that the mutual coordinate transformation can easily be carried out. For this reason, the monitoring camera 9 does not need to be accommodated in the same housing as the iris image pick-up device 1 body but may be provided in another portion.

Furthermore, the external image processing section 10 can take a time difference between images sent from the monitoring camera 9, thereby catching the image of a moving object, for example. It is assumed that teaching is previously carried out in such a manner that the image of the moving object can be decided to be the image of a person when the image of the moving object meets predetermined conditions.

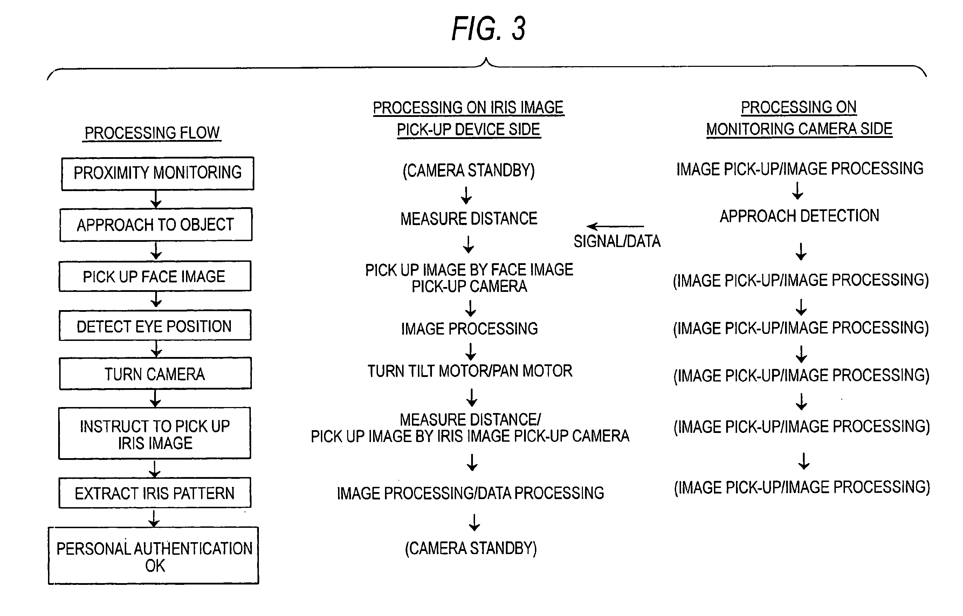

Fig. 3 is a diagram for explaining the operation of the iris image pick-up device 1 having the structure described above. The monitoring camera 9 periodically fetches the image of the circumference of the place in which the iris image pick-up device 1 is provided and always carries out monitoring whether a person to be authenticated is present before the iris image pick-up device 1 or not. Moreover, the turntable 5 mounting the iris image pick-up camera 2, the face image pick-up camera 3 and the distance measuring sensor 4 is pointed at such a direction that a person can statistically stand most easily and stands by as a specified position.

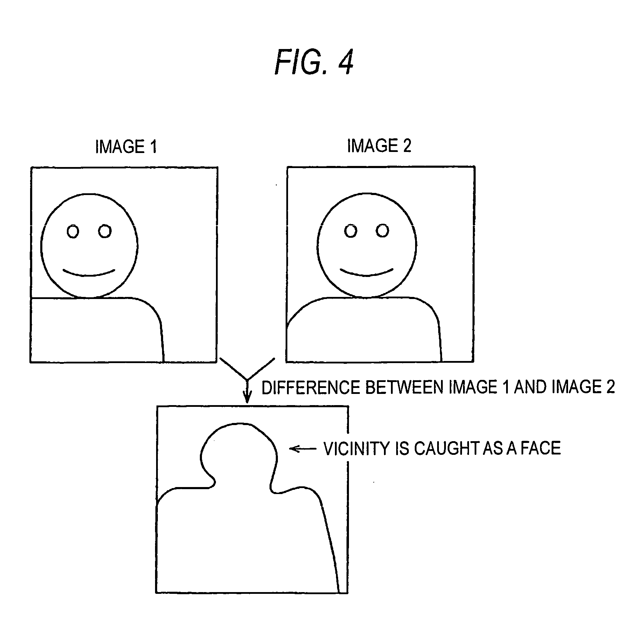

It is assumed that the object enters the shooting range of the monitoring camera 9 in accordance with the leading section 8. As a matter of course, the shooting range of the monitoring camera 9 is larger than each of the shooting ranges of the iris image pick-up camera 2 and the face image pick-up camera 3. The image picked up by the monitoring camera 9 is fetched into the external image processing section 10 and a time difference between continuous pick-up images is taken, for example. Consequently, the image of a moving person is detected in silhouette as shown in Fig. 4.

The moment that the image of the moving person is detected, the control section 14 decides that the object comes close to the iris image pick-up device 1 body and takes such a posture as to pick up the face image of the object by means of the face image pick-up camera 3. First of all, a distance to the object is measured by the distance measuring sensor 4, the face image pick-up camera 3 is brought into the direction of the object to pick up an image, the image thus picked up is analyzed by the internal image processing section 11 and the position coordinates of the eye of the object are calculated. The position of the eye of the object is calculated by using a triangulation principle based on the position coordinates of the eye and information about the distance obtained by the distance measuring sensor 4.

In order to bring the iris image pick-up camera 2 into the direction of the position of the eye which is calculated, next, the control section 14 gives an angle command to the pan motor 6 and the tilt motor 7 through the motor driver 12 and turns the mirror 13, and opposes the optical axis of the iris image pick-up camera 2 to the direction of the eye of the object, that is, the iris, and measures a distance to the vicinity of the iris of the object by means of the distance measuring sensor 4 opposed in the direction of the iris in the same manner as the turntable 5.

The iris image pick-up camera 2 is caused to carry out an auto focus (AF) operation corresponding to the distance, and an image pick-up command is output to the iris image pick-up camera 2 after the AF operation is ended. Consequently, the iris image of the object is picked up and the image thus picked up is transferred to the internal image processing section 11.

The internal image processing section 11 extracts an iris pattern from the iris image, generates code data to be used for a personal authentication and transfers an iris authentication code to an authentication processing section which is not shown.

According to the iris image pick-up device in accordance with the first embodiment of the invention, thus, it is possible to detect that the object approaches the pan and tilt ranges of the cameras 3 and 2 for iris image pick-up by analyzing the image picked up by the monitoring camera 9. Consequently, the distance measuring sensor does not need to be used as a proximity sensor. Accordingly, it is not necessary to move the turntable 5 so as to point at the direction of a proximity mode (a mode using the distance measuring sensor as the proximity sensor) which is different from such a direction as to pick up the image of the iris. Therefore, it is possible to omit the turning operation of the turntable for bringing the face image pick-up camera 3 and the iris image pick-up camera 2 from the direction of the proximity mode into the direction of the object, thereby shortening a time taken for picking up the image of the iris.

While the description has been given to the example in which the face image pick-up camera 3 is used to calculate the position of the eye and the image of the iris is then picked up by the iris image pick-up camera 2 in the embodiment, it is also possible to start to pick up the image of the eye by the iris image pick-up camera as a result of the analysis of the image picked up by the monitoring camera without picking up the face image and calculating the position of the eye from the face image in the case in which the numbers of pixels of a CCD and a CMOS image sensor to be used for the iris image pick-up camera 2 is sufficiently large or the case in which the pan and tilt operation ranges of the cameras 2 and 3 are small.

While the iris image pick-up camera 2 and the face image pick-up camera 3 are turned to change the image pick-up direction by using the pan motor 6 and the tilt motor 7 in the embodiment, moreover, the invention can also be applied to such a structure that a plurality of cameras is used and changed over to pick up the image of the target portion of the object.

While the pan turn of the iris image pick-up camera 2 is carried out by the mirror 13 and the pan motor 6, furthermore, it is also possible to employ a structure in which the iris image pick-up camera 2 is directly turned and a structure in which a reduction gear mechanism is added. Although the iris image pick-up camera 2 according to the embodiment is equipped with the AF function, moreover, the AF function is not always required in the case in which the operation range of the object is small and a depth of field can be sufficiently taken or the case in which a plurality of cameras is used.

### (Second Embodiment)

Next, description will be given to an iris image pick-up device according to a second embodiment of the invention. While the structure of the iris image pick-up device according to the embodiment is the same as that of the iris image pick-up device according to the first embodiment shown in Figs. 1 and 2, the embodiment is characterized in that an image picked up by a monitoring camera 9 when an object comes close to the iris image pick-up device is processed in the following way by an external image processing section 10 and whether the object is stationary is detected based on the motion of the image.

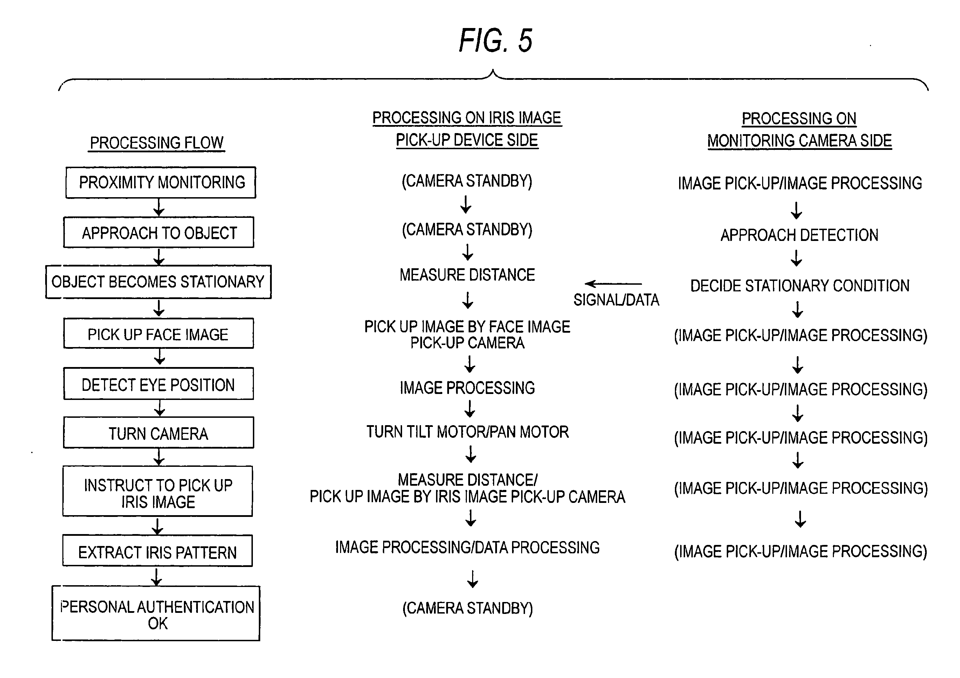

Fig. 5 is a diagram for explaining a procedure for the operation of the iris image pick-up device according to the embodiment. By the same method as that in the first embodiment, when an object proceeding while seeing a leading section 8 enters the shooting range of the monitoring camera 9, the image of a person is extracted as shown in Fig. 4.

The external image processing section 10 follows the motion of the image of the object, and a difference in the motion is present in a difference between the images which are picked up while the object is moving. For this reason, information about the motion of the object is continuously extracted.

When the object becomes stationary, information about the difference in the motion disappears. The external image processing section 10 decides that the object is stationary. when the information about the difference in the motion disappears, and gives a notice of the decision to a control section 14. The control section 14 receiving the notice outputs a command for starting to pick up a face image or an iris image, thereby picking up the face image or the iris image. Consequently, the image of the target portion of the object can be picked up immediately when the object becomes stationary. Thus, it is possible to acquire an excellent image having no blur.

As described above, the image picked up by the monitoring camera 9 is processed. Consequently, whether the object becomes stationary is detected. When it is detected that the object becomes stationary, the authentication object image is picked up. Thus, it is possible to acquire an excellent image having no blur which is suitable for generating an authentication code.

### (Third Embodiment)

Next, description will be given to an iris image pick-up device according to a third embodiment of the invention. While the structure of the iris image pick-up device according to the embodiment is the same as the iris image pick-up device according to the first embodiment, the embodiment is characterized in that an image picked up by a monitoring camera is processed, a location in which objects are present and the number of objects are grasped, the motion of each object is tracked, and the image of a target object, that is, the target portion of a person to be authenticated is picked up based on the information when images of people are taken in the image picked up by the monitoring camera.

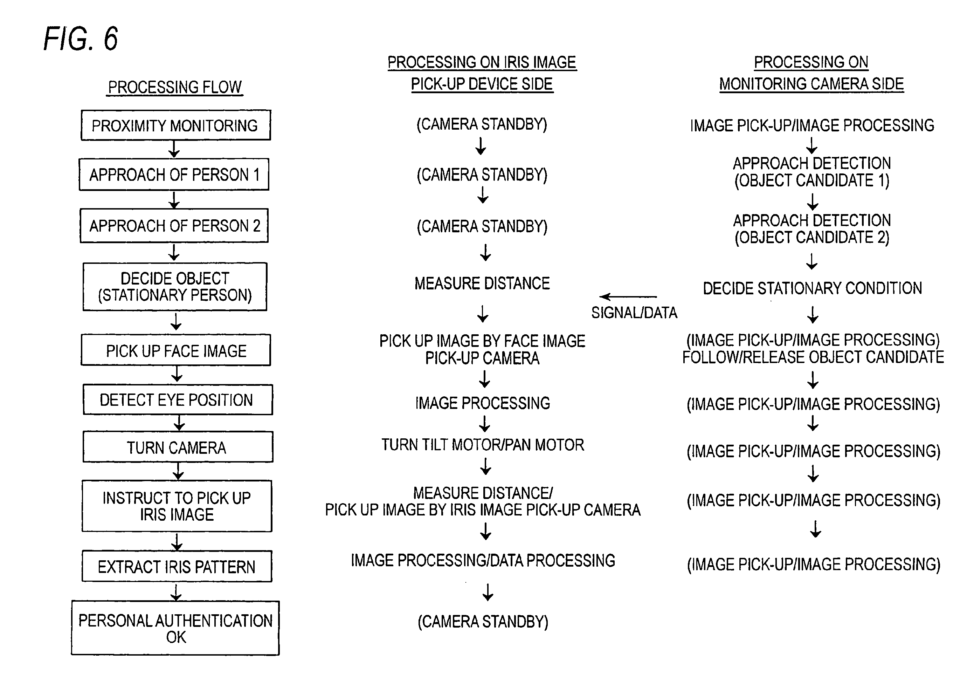

Fig. 6 is a diagram for explaining a procedure for the operation of the iris image pick-up device according to the embodiment. By the same method as that in the first embodiment, when a person enters the shooting range of a monitoring camera 9, the image of the person is extracted as shown in Fig. 4. An external image processing section 10 monitors the motion of each object in order of a first object candidate, a second object candidate, ··· when another person enters the shooting range of the monitoring camera 9 while following the motion of the image of the person.

When any of the object images becomes stationary within the pan and tilt operation ranges of the iris image pick-up device and the other object images get out of the shooting range of the monitoring camera 9 (or a preset range within the shooting range), the stationary object is decided to be a true object, that is, a person to be authenticated and a notice of the decision is given to a control section 14. The control section 14 receiving the notice brings cameras 2 and 3 toward the person to be authenticated in order to pick up the image of a target portion.

Also in the case in which people are present in the shooting range of the monitoring camera, thus, it is possible to easily identify the person to be authenticated, thereby picking up the authentication object image of the person.

As described above, according to the iris image pick-up device in accordance with the third embodiment of the invention, even if people are present within the shooting range of the monitoring camera 9, the motion of each person is tracked to decide a true person to be authenticated. Consequently, it is possible to reliably pick up the authentication object image of the person.

According to the invention, it is possible to provide an authentication object image pick-up device capable of reliably picking up the excellent authentication object image of a person to be authenticated in a short time.

## Claims

1. An authentication object image pick-up device comprising:
a face image pick-up device for picking up a face image of a person to be authenticated;
an eye image pick-up device being pointed at a direction of an eye of the authenticated person obtained by analyzing the face image of the authenticated person picked up by the face image pick-up device, and picking up an eye image of the person;
a monitoring image pick-up device for picking up an image of a circumference of places in which the face image pick-up device and the eye image pick-up device are provided; and
a control section for analyzing the image picked up by the monitoring image pick-up device and starting an image pick-up operation of the face image pick-up device when detecting that the authenticated person enters a shooting range of the face image pick-up device.

2. An authentication object image pick-up device comprising:
an eye image pick-up device for picking up an eye image of a person to be authenticated;
a monitoring image pick-up device for picking up an image of a circumference of a place in which the eye image pick-up device is provided; and
a control section for analyzing the image picked up by the monitoring image pick-up device and starting an image pick-up operation of the eye image pick-up device when detecting that the authenticated person enters a shooting range of the eye image pick-up device.

3. The authentication object image pick-up device according to Claim 1,
wherein the control section extracts an iris feature pattern or a retina feature pattern from the eye image.

4. The authentication object image pick-up device according to Claim 2,
wherein the control section extracts an iris feature pattern or a retina feature pattern from the eye image.

5. An authentication object image pick-up device comprising:
a face image pick-up device for picking up a face image of a person to be authenticated;
a monitoring image pick-up device for picking up an image of a circumference of a place in which the face image pick-up device is provided; and
a control section for analyzing the image picked up by the monitoring image pick-up section and starting an image pick-up operation of the face image pick-up device when detecting that the authenticated person enters a shooting range of the face image pick-up device.

6. The authentication object image pick-up device according to Claim 5,
wherein the control section extracts a face feature pattern from the face image.

7. The authentication object image pick-up device according to Claim 3,
wherein the control section monitors the image picked up by the monitoring image pick-up device and extracts the feature pattern from an authentication object image picked up at the moment that the image of the authenticated person becomes stationary.

8. The authentication object image pick-up device according to Claim 4,
wherein the control section monitors the image picked up by the monitoring image pick-up device and extracts the feature pattern from an authentication object image picked up at the moment that the image of the authenticated person becomes stationary.

9. The authentication object image pick-up device according to Claim 6,
wherein the control section monitors the image picked up by the monitoring image pick-up device and extracts the feature pattern from an authentication object image picked up at the moment that the image of the authenticated person becomes stationary.

10. The authentication object image pick-up device according to any of Claims 1 to 9,
wherein the control section decides a stationary object in the shooting range as a authenticated person when images of a plurality of moving objects are present in the image picked up by the monitoring image pick-up device.

11. An authentication object image pick-up method comprising the steps of:
analyzing an image picked up by a monitoring image pick-up device for picking up an image of a circumference of a place in which a face image pick-up device for picking up a face image of a person to be authenticated is provided;
starting an image pick-up operation of the face image pick-up device when detecting that the authenticated person enters a shooting range of the face image pick-up means;
pointing an eye image pick-up device at a direction of an eye of the authenticated person obtained by analyzing the face image picked up by the face image pick-up device; and
picking up an eye image of the authenticated person.

12. An authentication object image pick-up method comprising the steps of:
analyzing an image picked up by a monitoring image pick-up device for picking up an image of a circumference of a place in which an eye image pick-up device for picking up an eye image of a person to be authenticated is provided;
starting an image pick-up operation of the eye image pick-up device when detecting that the authenticated person enters a shooting range of the eye image pick-up device.

13. The authentication object image pick-up method according to Claim 11,
wherein an iris feature pattern or a retina feature pattern is extracted from the eye image.

14. The authentication object image pick-up method according to Claim 12,
wherein an iris feature pattern or a retina feature pattern is extracted from the eye image.

15. An authentication object image pick-up method comprising the steps of:
analyzing an image picked up by monitoring an image pick-up device for picking up an image of a circumference of a place in which face an image pick-up device. for picking up a face image of a person to be authenticated is provided; and
starting an image pick-up operation of the face image pick-up device when detecting that the authenticated person enters a shooting range of the face image pick-up device.

16. The authentication object image pick-up method according to Claim 15,
wherein a face feature pattern is extracted from the face image.

17. The authentication object image pick-up method according to Claim 13,
wherein the image picked up by the monitoring image pick-up device is monitored, and
wherein the feature pattern is extracted from a authentication object image picked up at the moment that an image of the authenticated person becomes stationary.

18. The authentication object image pick-up method according to Claim 14,
wherein the image picked up by the monitoring image pick-up device is monitored, and
wherein the feature pattern is extracted from a authentication object image picked up at the moment that an image of the authenticated person becomes stationary.

19. The authentication object image pick-up method according to Claim 16,
wherein the image picked up by the monitoring image pick-up device is monitored, and
wherein the feature pattern is extracted from a authentication object image picked up at the moment that an image of the authenticated person becomes stationary.

20. The authentication object image pick-up method according to any of Claims 11 to 19,
wherein when images of a plurality of moving objects are present in the image picked up by the monitoring image pick-up device, the stationary object in the shooting range is set to be the authenticated person.
